# EUROPÄISCHE PATENTSCHRIFT

(11) **EP 3 224 695 B1**
(45) Veröffentlichungstag und Bekanntmachung des Hinweises auf die Patenterteilung: **10.06.2020**
(21) Anmeldenummer: 15767140.5
(22) Anmeldetag: 21.09.2015
(51) Int. Cl.: G06F 3/01, G06F 3/041, G06F 3/0354

(54) **VERFAHREN ZUR TAKTILEN INTERAKTION EINES BENUTZERS MIT EINEM ELEKTRONISCHEN GERÄT UND ELEKTRONISCHES GERÄT HIERZU**
METHOD FOR TACTILE USER INTERACTION WITH AN ELECTRONIC DEVICE, AND AN ELECTRONIC DEVICE FOR SAME
PROCÉDÉ PERMETTANT L'INTERACTION TACTILE ENTRE UN UTILISATEUR ET UN APPAREIL ÉLECTRONIQUE, ET APPAREIL ÉLECTRONIQUE ASSOCIÉ

(30) Priorität: 26.11.2014 DE 102014224110
(43) Veröffentlichungstag der Anmeldung: 04.10.2017
(73) Patentinhaber: Robert Bosch GmbH, 70442 Stuttgart (DE)
(72) Erfinder: HERMANNS, Ingo, 31134 Hildesheim (DE); FREITAG, Thomas, 31191 Algermissen (DE)
(86) Internationale Anmeldenummer: PCT/EP2015/071598
(87) Internationale Veröffentlichungsnummer: WO 2016/082963

(56) Entgegenhaltungen:
- DE-U1- 20 180 024
- US-A1- 2013 285 910
- US-A1- 2014 062 927

## Beschreibung

Die Erfindung betrifft ein Verfahren zur taktilen Interaktion eines Benutzers mit einem elektronischen Gerät und die Erfindung betrifft ein elektronisches Gerät zur Ausführung des Verfahrens, beispielsweise ein Smartphone, ein Tablet-PC, ein Navigationsgerät, ein Autoradiogerät oder eine Spielekonsole, aufweisend einen Prozessor zur Datenverarbeitung und aufweisend eine berührungsempfindliche Bedienoberfläche, wobei das Gerät eine Vibrationseinrichtung zur Erzeugung einer Vibration aufweist, und wobei die Bedienoberfläche mit einer Abtasteinrichtung zur Erzeugung eines Abtastsignals in Abhängigkeit einer Position einer Berührung auf der Bedienoberfläche ausgebildet ist.

### STAND DER TECHNIK

Neben in Hardware ausgeführten Bedienelementen, wie beispielsweise Druckschalter, Dreh- oder Schieberegler verfügen elektronische Geräte zu ihrer Bedienung häufig auch über mechanikfreie, berührungsempfindliche Bedienoberflächen, wie beispielsweise sogenannte Touchpads bei Smartphones oder Tablet-PCs. Hardware-Bedienelemente wie auch berührungsempfindliche Bedienoberflächen können kontextabhängig verschiedenen Bedienfunktionen in einem Bedienbereich zugeordnet werden. Darüber hinaus können die Bedienoberflächen auch in kontextabhängig variierende Teilbereiche untergliedert sein. Letzteres ist beispielsweise bei Smartphones bekannt, bei denen üblicherweise eine berührungsempfindliche Bedienoberfläche als Bedieneinrichtung vorgesehen ist, wobei je nach aktiver Funktion voneinander verschiedene und verschieden große Teilbereiche der Bedienoberfläche zur Bedienung verfügbar sind. Die Bedienoberfläche ist zur Erfassung der Berührung mit einer Abtasteinrichtung ausgeführt, und bei Sensierung einer Berührung wird ein Abtastsignal abhängig von der Position der Berührung auf der Bedienoberfläche erzeugt.

Die Bedienoberflächen sind zugleich als Displays ausgeführt und zeigen den Bedienbereich visuell an, so dass ein Benutzer aufgrund der visuellen Information die Berührung und damit die Funktion steuern kann. Typischerweise dienen diese Bedienbereiche, häufig als Icons oder Softkeys bezeichnet, zur taktilen Benutzung und weisen Größen auf, die etwa der Größe einer Fingerkuppe entspricht. Solche Bedieneinrichtungen sind beispielsweise in der EP 1964022 B1 oder in der EP 2126678 B1 beschrieben.

Touchpads, beispielsweise für Laptops, verfügen teilweise über abgesetzte Bereiche, wie etwa eine seitliche Scrollleiste, die durch eine vom Rest der Bedienoberfläche abweichende Oberflächenstruktur gekennzeichnet ist und damit eine haptische Orientierung erleichtert. Diese abweichende Oberflächenstruktur erstreckt sich über einen fest vorgegebenen Bereich und ist im Betrieb unveränderlich. Oberflächen von Smartphones oder Tablet-PCs sind aber üblicherweise glatt und hinsichtlich ihrer Oberflächenstruktur während des Gebrauchs unveränderlich. Eine Orientierung auf den bekannten Bedienoberflächen ist daher ohne Sichtkontakt nicht möglich, so dass eine taktile Interaktion zwischen einem Benutzer und dem elektronischen Gerät wünschenswert wäre.

Die DE 21 2012 000 106 U1 beschreibt ein mobiles elektronisches Gerät mit einer Vibrationseinrichtung zur Erzeugung einer Vibration. Dabei wird ein System zum Erstellen benutzerdefinierter Vibrationsmuster beschrieben, welche durch das mobile elektronische Gerät wiedergegeben werden können.

In der US 2014/0062927A1 wird ein Verfahren zur taktilen Interaktion eines Benutzers mit einem elektronischen Gerät beschrieben.

Die DE 201 80 024 U1 betrifft eine Berührungssteuerung mit haptischer Rückkopplung zur Eingabe von Signalen in einen Computer und zur Ausgabe von Kräften an einen Benutzer der Berührungssteuerung.

In der US 2013/0285910A1 wird ein elektronisches Gerät mit einer berührungsempfindlichen Bedienoberfläche und einer Vibrationseinrichtung beschrieben. Dabei ist vorgesehen, dass die Vibration in Abhängigkeit der Bewegungsgeschwindigkeit des Benutzers geändert werden kann.

### OFFENBARUNG DER ERFINDUNG

Aufgabe der Erfindung ist die Weiterbildung eines Verfahrens zur taktilen Interaktion eines Benutzers mit einem elektronischen Gerät, bei dem die Interaktion eines Benutzers mit dem elektronischen Gerät basierend auf einem taktilen Auffinden und einer taktilen Wahrnehmung einer Funktion durch den Benutzer erweitert wird. Insbesondere soll das Auffinden einer Position beziehungsweise eines Bedienbereichs, beispielsweise eines Icons oder Softkeys auf der Bedienoberfläche mit Hilfe einer taktile Wahrnehmung erleichtert werden.

Diese Aufgabe wird ausgehend von einem Verfahren zur taktilen Interaktion eines Benutzers mit einem elektronischen Gerät gemäß dem Oberbegriff des Anspruches 1 sowie ausgehend von einem elektronischen Gerät gemäß Anspruch 6 mit den jeweils kennzeichnenden Merkmalen gelöst. Vorteilhafte Weiterbildungen der Erfindung sind in den abhängigen Ansprüchen angegeben.

Die Erfindung sieht vor, dass eine Vibration wenigstens in der Bedienoberfläche in Abhängigkeit einer Bewegung erzeugt wird, mit der der Benutzer die Position der Berührung innerhalb eines Bedienbereichs auf der Bedienoberfläche ändert. Somit wird nicht nur ein Impuls ausgegeben, wenn der Benutzer die Position der Berührung beispielsweise in einen Bedienbereich hineinbewegt, sondern insbesondere dann, wenn Benutzer die Position der Berührung innerhalb des Bedienbereichs bewegt. Zur Erzeugung der Vibrationsimpulse ist innerhalb des Bedienbereichs eine Textur mit einem vorbestimmten Muster vorgesehen. Im Vergleich mit einer Berührungsfläche, beispielsweise der Berührungsfläche durch eine Fingerkuppe des Benutzers, weist die Textur ein feines Muster auf. Das bedeutet, dass sowohl innerhalb des Bedienbereichs sowie auch auf der Berührungsfläche mehrere Konturwechsel der Textur beziehungsweise des Musters vorgesehen sind.

Durch die erfindungsgemäße Weiterbildung eines Verfahrens zur taktilen Interaktion eines Benutzers mit einem elektronischen Gerät wird die Bedienung des Gerätes ohne Blickzuwendung des Benutzers auf die Bedienoberfläche möglich gemacht bzw. erleichtert. Dieses wird durch eine haptische Rückmeldung des Gerätes an den Benutzer durch eine Vibration erreicht, die nicht ausschließlich positionsabhängig ist, sondern die insbesondere von der Bewegung der Berührung auf der Bedienoberfläche abhängig ist. Die Berührung kann beispielsweise durch einen Kontakt eines Fingers des Benutzers mit der Bedienoberfläche erzeugt werden, wobei es auch denkbar ist, das Verfahren mit Verwendung eines Eingabestiftes auszuführen, der in der Hand des Benutzers geführt wird.

Verfährt der Benutzer seinen Finger über die Bedienoberfläche, wird also die Position der Berührung auf der Bedienoberfläche geändert, so wird die Änderung der Position über die Abtasteinrichtung auf der Bedienoberfläche erfasst und aus der Erfassung wird ein Abtastsignal abgeleitet, was in Abhängigkeit der Position der Berührung auf der Bedienoberfläche ausgegeben wird.

Die erreichten Vorteile der nicht visuellen, taktilen Interaktion eines Benutzers mit einem elektronischen Gerät liegen beispielsweise darin begründet, dass Eingabeversuche durch eine Betätigung inaktiver Areale der Bedienoberfläche vermieden werden, und eine visuelle Ablenkungsgefahr insbesondere bei automotiven Produkten wird reduziert. Die Eingaben über die Bedienoberflächen durch taktile Interaktion werden intuitiver, und die Bedienbarkeit der Geräte kann auch in rauer Umgebung verbessert werden. Beispielsweise kann eine Bedienung bei Dunkelheit erfolgen, oder die Bedienung des elektronischen Gerätes, beispielsweise ein Smartphone, kann durch einen Benutzer ohne einen Blickkontakt herstellen zu können, in einer Tasche erfolgen, beispielsweise um ein Klingelsignal zu deaktivieren.

Die Vibration kann nur in der Bedienoberfläche, insbesondere jedoch auch im gesamten Gerät erzeugt werden. Die Vibration sollte dabei derart ausgebildet sein, dass diese taktil mit dem Finger des Benutzers erkannt werden kann.

Ein Bedienbereich kann beispielsweise eine Schaltfläche, eine Grafik, ein Muster oder dergleichen darstellen. Erfindungsgemäß wird die Vibration in Abhängigkeit des wenigstens einen Bedienbereiches erzeugt. Verfährt der Benutzer den Finger über der Bedienoberfläche, so wird in Abhängigkeit des Bedienbereiches, dem eine Funktion hinterlegt sein kann, die Vibration erzeugt. So kann beispielsweise bereits nur durch die Information, die durch die Vibration erzeugt wird, das Auffinden eines bestimmten, zur Bedienung der Funktion des Gerätes aktivierten Teilbereiches innerhalb der Bedienoberfläche ermöglicht werden, also beispielsweise einer bestimmten Teilfläche der Bedienoberfläche.

Bevorzugterweise wird die Vibration nur erzeugt, falls der Benutzer die Position der Berührung auf der Bedienoberfläche innerhalb des mindestens einen Bedienbereichs ändert. Hierdurch kann dem Benutzer beim Verfahren seines Fingers über der Bedienoberfläche auch ohne Blickkontakt mit der Bedienoberfläche eine Information bereitgestellt werden, ob sich die Berührung bereits über einem gewünschten Bedienbereich auf der Bedienoberfläche befindet. Folglich ist eine Art von Navigation des Fingers über der Bedienoberfläche basierend auf einer wahrnehmbaren Vibration ermöglicht.

Nach einer vorteilhaften Ausführungsvariante der Erfindung kann die Frequenz der Vibration in Abhängigkeit der Bewegung verändert werden, mit der der Benutzer die Position der Berührung auf der Bedienoberfläche ändert. Beispielsweise kann die Frequenz der Vibration bei Erreichen eines vorbestimmten Bereichs, beispielsweise eines zentralen Bereichs, innerhalb eines Bedienbereichs zur Ausführung einer Funktion ein Maximum erreichen.

Gemäß einer weiteren bevorzugten Ausführungsvariante des Verfahrens kann die Vibration in diskreten, aufeinander folgenden Vibrationspulsen durch die Vibrationseinrichtung erzeugt werden, wobei eine Pulsfrequenz der Vibrationspulse in Abhängigkeit der Bewegung verändert werden kann, mit der der Benutzer die Position der Berührung auf der Bedienoberfläche ändert. Die Pulsform der Pulsfolge kann beispielsweise dreieckig, sinusförmig, halbsinusförmig ausgeführt sein oder eine Kombination aus den Formen aufweisen, wobei beliebig vordefinierte Pulsformen insbesondere abhängig von der zugeordneten Funktion bereitgestellt werden können, oder es kann sogar eine Pulsform mit einer entsprechenden Frequenzfolge erzeugt werden. Besonders bevorzugterweise ist eine rechteckförmige Pulsform vorgesehen. Rechteckpulse bieten erfahrungsgemäß eine besondere Wahrnehmbarkeit.

Es werden Vibrationspulse bereitgestellt, die eine taktil wahrnehmbare virtuelle Textur bilden, die aus dem Bedienbereich abgeleitet wird. Auf diese Weise kann die sensorische Rückmeldung sehr intuitiv beeinflusst werden, und virtuelle Bedientasten oder Bedienelemente sind auf der Bedienoberfläche leicht auffindbar und über unterschiedliche virtuelle Texturen voneinander unterscheidbar. Dabei können mehrere separate Bedienbereiche definiert werden, beispielsweise Schaltflächen, Grafiken oder Muster, wobei die Vibration immer in Abhängigkeit des wenigsten einen Bedienbereiches erzeugt wird. Dabei sind auf der Bedienoberfläche mindestens zwei voneinander beabstandete Bedienbereiche vorgesehen, wobei aus jedem der mindestens beiden Bedienbereiche eine unterschiedliche Textur abgeleitet wird.

Die Textur bildet somit ein Muster ab. Erfindungsgemäß werden durch eine Textur mehrere Positionen definiert, wobei kontinuierlich die durch die Abtasteinrichtung ermittelte aktuelle Position der Berührung mit den durch die Textur definierten Positionen und somit mit den Daten des Texturmusters verglichen wird. Wird dabei eine Bewegung der Berührung über eine durch die Textur definierte Position hinweg erkannt, wird von der Vibrationseinrichtung ein Vibrationspuls ausgegeben. Somit werden nur dann Vibrationspulse erzeugt, wenn beispielsweise ein Finger über diese durch die Textur definierten Positionen hinwegbewegt wird.

Bevorzugterweise können mehrere durch die Textur definierte Positionen an einander grenzend und/oder beabstandet zueinander angeordnet sein. Somit kann beispielsweise eine Textur mit mehreren voneinander beabstandeten Linien definiert werden. Diese Linien können gerade oder auch gekrümmt beziehungsweise gebogen ausgebildet sein. Wird eine Bewegung der Berührung über eine der Linien erkannt, wird ein Vibrationspuls ausgegeben. Der Abstand der Linien und/oder der durch die Textur definierten Positionen kann innerhalb eines Bedienbereiches konstant oder nicht konstant sein. Beispielsweise kann der Abstand zur Mitte des Bedienbereichs hin kontinuierlich kürzer werden.

Bewegt der Benutzer den Finger schnell über die Bedienoberfläche, werden Vibrationsimpulse in kurzen Abständen erzeugt. Bewegt der Benutzer den Finger langsam über die Bedienoberfläche, werden Vibrationsimpulse in längeren Abständen erzeugt. Ruht der Finger auf einer Position auf der Bedienoberfläche, so wird kein Vibrationsimpuls erzeugt. Somit ist die Frequenz der Vibrationsimpulse zum Einen von der Bewegungsgeschwindigkeit und zum Anderen vom Abstand der durch die Textur definierten Positionen abhängig.

Der Bedienbereich auf der Bedienoberfläche des elektronischen Geräts weist beispielsweise eine Längsrichtung und eine Querrichtung auf. Bevorzugterweise kann die Vibration in getrennter Abhängigkeit von der Bewegung der Berührung in Längsrichtung oder in Querrichtung ausgegeben werden.

Die Erfindung bezieht sich weiterhin auf ein elektronisches Gerät zur Ausführung eines Verfahrens zur taktilen Interaktion eines Benutzers mit dem elektronischen Gerät, beispielsweise ein Smartphone oder ein Tablet-PC, aufweisend wenigstens einen Prozessor zur Datenverarbeitung und aufweisend eine berührungsempfindliche Bedienoberfläche, wobei das Gerät eine Vibrationseinrichtung zur Erzeugung einer Vibration aufweist, und wobei die Bedienoberfläche mit einer Abtasteinrichtung zur Erzeugung eines Abtastsignals in Abhängigkeit einer Position einer Berührung auf der Bedienoberfläche ausgebildet ist, und wobei vorgesehen ist, dass eine Vibration wenigstens in der Bedienoberfläche in Abhängigkeit einer Bewegung erzeugt wird, mit der der Benutzer die Position der Berührung auf der Bedienoberfläche ändert. Die in Zusammenhang mit dem Verfahren beschriebenen weiteren Merkmale und zugehörigen Vorteile finden für das erfindungsgemäße elektronische Gerät ebenfalls Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: ein Beispiel einer Textur in einem Bedienbereich auf einer Bedienoberfläche eines elektronischen Gerät welche taktil erfasst werden soll,
- Fig. 2: ein Ausschnitt eines elektronischen Gerätes mit einer Bedienoberfläche, auf der die Textur gemäß Fig. 1 abgebildet ist,
- Fig. 3: Darstellung der virtuellen Textur über einer Zeitachse,
- Fig. 4: die Darstellung eines Zustandswechsels zur Erzeugung eines Pulses,
- Fig. 5: die Darstellung von Einzelpulsen in Rechteckform, abgeleitet aus einem Zustandswechsel gemäß Fig. 4,
- Fig. 6: ein Geschwindigkeitsprofil in Abhängigkeit einer Fingerbewegung über einer Zeitachse,
- Fig. 7: eine Darstellung einer Pulsfolge mit einer sich ändernden Pulsfolgefrequenz in Abhängigkeit des Ortes der Bewegung gemäß Fig. 6,
- Fig. 8a-8h: die Darstellung mehrerer Texturen, die mit dem erfindungsgemäßen Verfahren haptisch erfasst werden können.

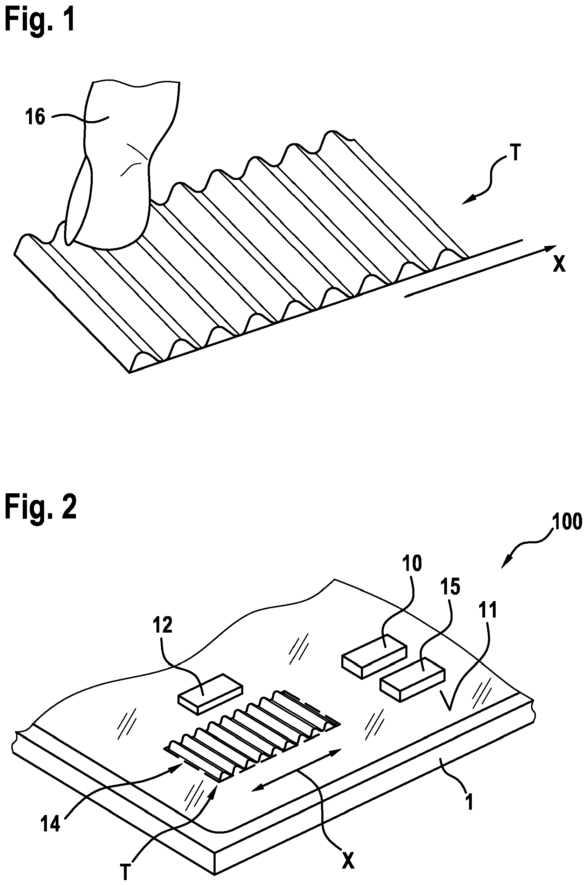

Fig. 1 zeigt ein Beispiel einer virtuellen Textur T am Beispiel eines Wellenprofils, welches mit einem Finger 16 eines Benutzers ertastet werden soll. Das Wellenprofil zeigt in X-Richtung aufeinander folgende Wellen, und bewegt der Benutzer seinen Finger 16 in X-Richtung, so erzeugt diese Bewegung geschwindigkeitsabhängig eine Vibration, die die virtuelle Textur T repräsentiert. Die virtuelle Textur T am Beispiel des Wellenprofils ist im Zusammenhang mit Fig. 2 näher beschrieben.

Fig. 2 zeigt abschnittsweise ein elektronisches Gerät 100 mit einer Bedienoberfläche 11, auf der die in einem Bedienbereich 14 vorgesehene virtuelle Textur T gemäß Fig. 1 taktil erfasst werden soll. Das elektronische Gerät 100, das abschnittsweise dargestellt ist, kann beispielsweise ein Smartphone oder ein Tablet-PC sein, und die Bedienoberfläche 11 kann in Form eines visuellen Displays ausgeführt sein.

Das elektronische Gerät 100 weist einen Prozessor 10 zur Datenverarbeitung auf, ferner umfasst das elektronische Gerät 100 eine Vibrationseinrichtung 12 zur Erzeugung einer Vibration, wobei die Vibration wenigstens in der Bedienoberfläche 11, insbesondere jedoch im gesamten Gerät 100, erzeugt werden soll.

Zusätzlich umfasst das elektronische Gerät 100 gemäß dem gezeigten Ausführungsbeispiel einen Speicher 15.

Die beispielhaft gezeigte virtuelle Textur T in Form des Wellenprofils erstreckt sich in einer X-Richtung, so dass bei einem Überstreichen mit dem Finger 16 in X-Richtung das Wellenprofil wahrnehmbar ist und bei einem Überstreichen mit dem Finger 16 in der Y-Richtung ist auf der Bedienoberfläche 11 keine Veränderung wahrzunehmen. Das Wellenprofil ist folglich nur in X-Richtung in seiner Struktur veränderlich, so dass auch nur bei einer Bewegung des Fingers 16 in X-Richtung eine Vibration ausgegeben werden soll, hingegen wird bei einer Bewegung des Fingers 16 in Y-Richtung keine Vibration ausgegeben.

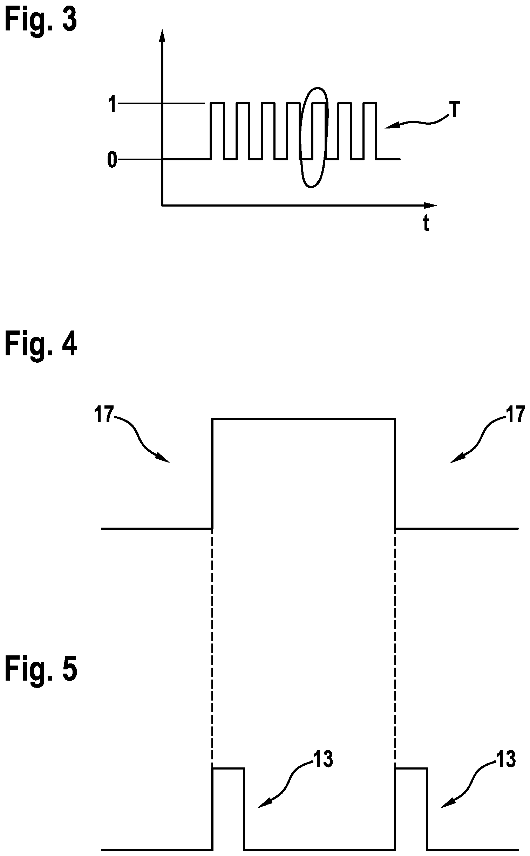

Fig. 3 zeigt ein Vibrationsprofil zur Darstellung des Wellenprofils, und das 0/1-Muster entspricht der virtuellen Textur T. Die "0" repräsentiert dabei das Ausbleiben der Vibration, und die "1" repräsentiert einen Impuls. Die einzelnen Rechteckpulse der Vibration sind diskrete, mit einer jeweils gleichen Dauer ausgegebene Vibrationen, wobei zwischen den Vibrationen entsprechende Pausen (0-Verlauf) vorliegen.

Die darzustellende Textur T, also beispielhaft das Wellenprofil, wird durch den Prozessor 10 in das 0/1-Muster überführt, dessen bildschirmbezogene rechtwinklige Koordinaten der 0/1-Übergänge im Speicher 15 abgelegt werden. Die Ausdehnung des gezeigten Wellenprofils ist auf den Bereich der darzustellenden Schaltfläche begrenzt, die mit dem Bedienbereich 14 angegeben ist. Die Form des Texturmusters wird dabei in kartesischen Koordinatenwerten, analog zu in Spalten und Zeilen angeordneten Pixeln der Bedienoberfläche 11, definiert. In diesem einfachen Fall ist das Wellenprofil streifenförmig und kennt nur zwei Zustände, nämlich 0 (kein Impuls) und 1 (voller Impuls). Diese Textur T kann, wie im gezeigten Beispiel, muss aber kein periodisches Muster aufweisen. Um eine Illusion einer virtuellen Textur T zu wecken, muss das Muster in Bezug auf die Abmessungen der Kuppe des Fingers 16 eine feine Struktur aufweisen. Die Position des Fingers 16 des Benutzers wird fortlaufend durch die Abtasteinrichtung, die beispielsweise über der Bedienoberfläche 11 angeordnet sein kann und die gleiche Größe aufweist wie die Bedienoberfläche 11, in kartesischen Koordinatenwerten desselben Koordinatensystems, also in Zeilen und Spalten, in welchem die virtuelle Textur T definiert ist, erfasst und dem Prozessor 10 zur Datenverarbeitung zur Verfügung gestellt.

Der Prozessor 10 vergleicht kontinuierlich Positionsdaten des Fingers 16 mit den Profildaten der virtuellen Textur T. Wird der Finger 16 über den Bedienbereich 14 mit dem Wellenprofil hinweg bewegt, so finden abhängig von der Fingerposition die Zustandswechsel 17 statt, beispielsweise ein Zustandswechsel von 0 auf 1, wie in Fig. 4 dargestellt. Bei jedem Zustandswechsel 17 wird nun ein einzelner Vibrationspuls 13 auf die Vibrationseinrichtung 12 gegeben, wobei zwei einzelne, isolierte Vibrationspulse 13 in Fig. 5 dargestellt sind. Der Vibrationspuls 13 lässt dabei die Bedienoberfläche 11 und beispielsweise auch das gesamte elektronische Gerät 100 vibrieren.

Die Form des einzelnen Vibrationspulses 13 ist in Fig. 5 beispielhaft als Rechteckpuls dargestellt, dieser kann auch eine Sinusform, eine Dreieckform oder zufällige Anteile der Formen aufweisen, wobei auch Kombinationen aus den genannten Formen zur Bildung des Vibrationspulses denkbar sind. Insbesondere können aus den virtuellen Texturen T abgeleitete Pulse definiert werden, wobei die unterschiedlichen Pulsformen vom Benutzer gegebenenfalls über seinen Finger 16 wahrnehmbar sein können. Somit kann ein Benutzer bereits durch die Pulsform erkennen, um welche Art von ertastetem Profil es sich handelt, beispielsweise ein Schalter oder ein Regler. Allgemein gilt jedoch, dass eine feinere virtuelle Textur T erzeugt werden kann durch geringere Abstände der Zustandswechsel 17, wodurch sich der Eindruck einer feineren Textur ergibt. Wird ein Rechteckpuls verwendet, so kann über die Pulsbreite die Intensität des haptischen Effektes ebenfalls gesteuert werden.

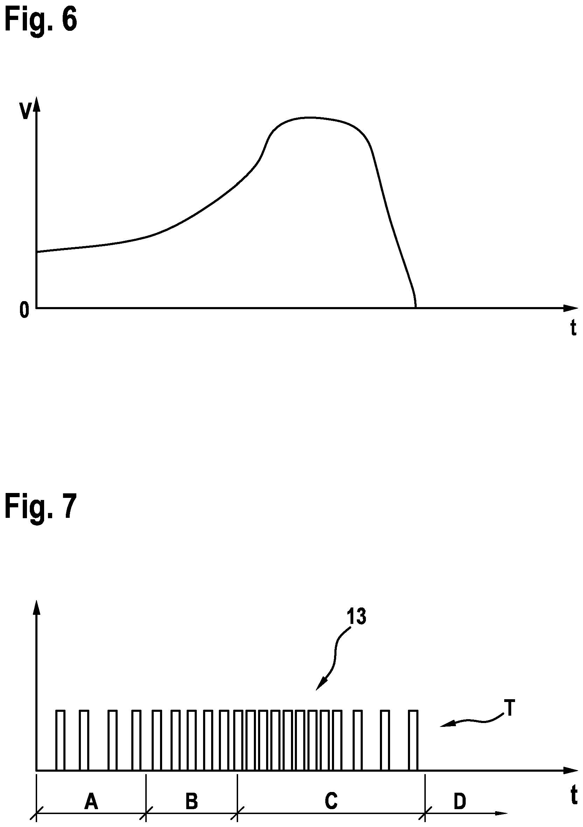

Bei einer zügigen Fingerbewegung mit einer Geschwindigkeit v, wie in Fig. 6 entlang der Richtung X über der Zeit t dargestellt, entsteht eine Signalfolge von Vibrationspulsen 13 abhängig von der virtuellen Textur T, wie in Fig. 7 gezeigt. Die gezeigte Kurve zeigt mehrere Bereiche A-D, und der Bereich A repräsentiert eine langsame Pulsfolge, der Bereich B eine schnellere Pulsfolge und der Bereich C eine besonders schnelle Pulsfolge. Somit kann über die Dichte der Signalfolge der einzelnen Vibrationspulse 13 die Textur T repräsentiert werden, wie mit den verschiedenen Signalfolgezeiten in Fig. 7 dargestellt.

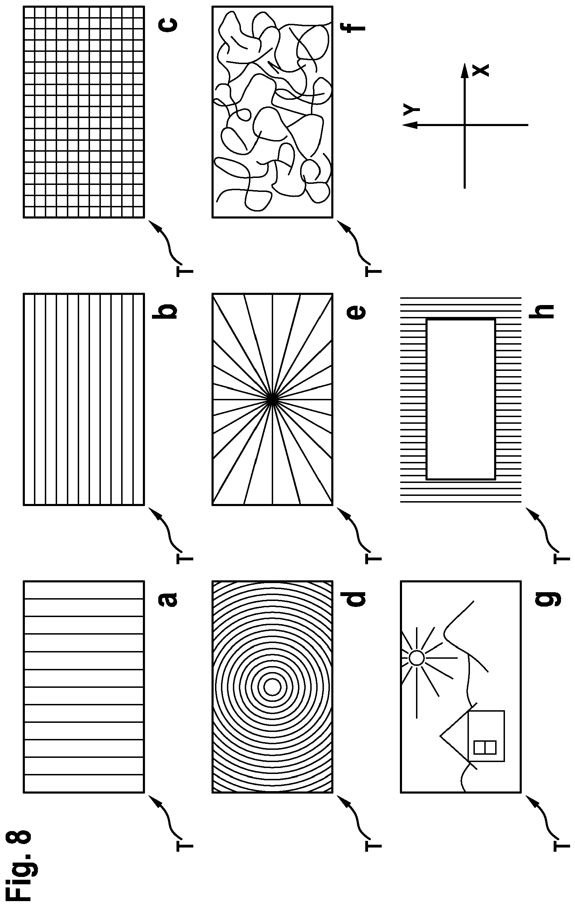

Fig. 8 zeigt mit den Abbildungen a bis h verschiedene Texturen T, wobei ein Koordinatensystem mit der horizontalen Richtung X und mit der vertikalen Richtung Y angezeigt ist, welches auf alle Abbildungen a bis g übertragbar sein soll. Das Beispiel in Fig. 8a zeigt ein Wellenprofil mit einer veränderlichen Oberfläche in der X-Richtung, und die virtuelle Textur gemäß Fig. 8b zeigt ein Wellenprofil mit einer veränderlichen Oberfläche in der Y-Richtung. Das Beispiel gemäß Fig. 8c zeigt eine virtuelle Textur T mit Wellenprofil sowohl in der X- als auch in der Y-Richtung. Ertastet ein Benutzer mit einem Finger den jeweiligen Bedienbereich, der durch die virtuelle Textur T gebildet wird, so kann bei einer Bewegung des Fingers eine entsprechende Vibration erzeugt werden.
Die weiteren grafischen Darstellungen in den Fig. 8d, 8e, 8f und 8g bilden unterschiedliche Texturen T, und wenn ein Benutzer mit seinem Finger über beispielsweise die dargestellten Striche und Linien fährt, wird bei entsprechender Überfahrt der Vibrationspuls bzw. eine Folge von Pulsen ausgelöst. Dadurch kann die Information über die dargestellte virtuelle Textur T haptisch an den Benutzer weitergegeben werden. Fig. 8h zeigt eine invertierte Textur.

## Patentansprüche

1. Verfahren zur taktilen Interaktion eines Benutzers mit einem elektronischen Gerät (100), beispielsweise ein Smartphone, ein Tablet-PC oder ein Navigationsgerät, aufweisend wenigstens einen Prozessor (10) zur Datenverarbeitung und aufweisend eine berührungsempfindliche Bedienoberfläche (11), wobei das Gerät (100) eine Vibrationseinrichtung (12) zur Erzeugung einer Vibration aufweist, und wobei die Bedienoberfläche (11) mit einer Abtasteinrichtung zur Erzeugung eines Abtastsignals in Abhängigkeit einer Position einer Berührung auf der Bedienoberfläche (11) ausgebildet ist, wobei
eine Vibration wenigstens in der Bedienoberfläche (11) in Abhängigkeit einer Bewegung erzeugt wird, mit der der Benutzer die Position der Berührung innerhalb eines Bedienbereichs (14) auf der Bedienoberfläche (11) ändert, wobei
die Vibration in Abhängigkeit des wenigstens einen Bedienbereiches (14), beispielsweise Schaltfläche, Grafik, Muster oder dergleichen, erzeugt wird
**dadurch gekennzeichnet, dass** durch die Vibrationspulse (13) eine taktil wahrnehmbare virtuelle Textur (T) gebildet wird, die aus dem Bedienbereich (14) abgeleitet wird, wobei
auf der Bedienoberfläche (11) mindestens zwei voneinander beabstandete Bedienbereiche (14) definiert werden, wobei aus jedem der mindestens beiden Bedienbereiche (14) eine unterschiedliche Textur (T) abgeleitet wird, wobei
durch eine Textur (T) mehrere Positionen definiert werden, wobei kontinuierlich die durch die Abtasteinrichtung ermittelte aktuelle Position der Berührung mit den durch die Textur (T) definierten Positionen verglichen wird, und von der Vibrationseinrichtung (12) ein Vibrationspuls (13) ausgegeben wird, wenn eine Bewegung der Berührung über eine durch die Textur (T) definierte Position hinweg erkannt wird, wobei
eine Frequenz von aufeinander folgenden Vibrationspulsen (13) vom Abstand der durch die Textur definierten Positionen abhängig ist.

2. Verfahren nach Anspruch 1, **dadurch gekennzeichnet, dass** die Vibration nur erzeugt wird, falls der Benutzer die Position der Berührung auf der Bedienoberfläche (11) innerhalb des mindestens einen Bedienbereichs (14) ändert.

3. Verfahren nach einem der vorgenannten Ansprüche, **dadurch gekennzeichnet, dass** die Frequenz der Vibration in Abhängigkeit der Bewegung verändert wird, mit der der Benutzer die Position der Berührung auf der Bedienoberfläche (11) ändert.

4. Verfahren nach einem der vorgenannten Ansprüche, **dadurch gekennzeichnet, dass** die Vibration in diskreten, aufeinander folgenden Vibrationspulsen (13) durch die Vibrationseinrichtung (12) erzeugt wird, wobei eine Pulsfrequenz der Vibrationspulse (13) in Abhängigkeit der Bewegung verändert wird, mit der der Benutzer die Position der Berührung auf der Bedienoberfläche (11) ändert.

5. Computerprogrammprodukt, aufweisend Programmteile zum Ausführen eines Verfahrens nach mindestens einem der voranstehenden Ansprüche 1 bis 4.

6. Elektronisches Gerät (100), insbesondere ein Smartphone, ein Tablet-PC oder ein Navigationsgerät, wobei das elektronische Gerät (100) wenigstens einen Prozessor (10) zur Datenverarbeitung und eine berührungsempfindliche Bedienoberfläche (11) aufweist, wobei das Gerät (100) ferner eine Vibrationseinrichtung (12) zur Erzeugung einer Vibration aufweist, und wobei die Bedienoberfläche (11) mit einer Abtasteinrichtung zur Erzeugung eines Abtastsignals in Abhängigkeit einer Position einer Berührung auf der Bedienoberfläche (11) ausgebildet ist, **dadurch gekennzeichnet, dass** das elektronisches Gerät (100) zur Ausführung eines Verfahrens zur taktilen Interaktion eines Benutzers mit dem elektronischen Gerät (100) gemäß einem Verfahren nach einem der Ansprüche 1 bis 4 ausgebildet ist.

## Claims

1. Method for the tactile interaction of a user with an electronic device (100), for example a smartphone, a tablet PC or a navigation device, having at least one processor (10) for processing data and having a touch-sensitive operator interface (11), wherein the device (100) has a vibration device (12) for producing a vibration, and wherein the operator interface (11) is designed with a scanning device for generating a scanning signal on the basis of a position of contact on the operator interface (11), wherein
a vibration is produced at least in the operator interface (11) on the basis of movement which is used by the user to change the position of the contact within an operating area (14) on the operator interface (11), wherein
the vibration is produced on the basis of the at least one operating area (14), for example a button, graphics, a pattern or the like,
**characterized in that** the vibration pulses (13) form a virtual texture (T) which can be perceived in a tactile manner and is derived from the operating area (14), wherein
at least two operating areas (14) which are spaced apart from one another are defined on the operator interface (11), wherein a different texture (T) is derived from each of the at least two operating areas (14), wherein
a plurality of positions are defined by a texture (T), wherein the current position of the contact, which is determined by the scanning device, is continuously compared with the positions defined by the texture (T), and a vibration pulse (13) is output by the vibration device (12) when a movement of the contact beyond a position defined by the texture (T) is detected, wherein
a frequency of successive vibration pulses (13) is dependent on the distance between the positions defined by the texture.

2. Method according to Claim 1, **characterized in that** the vibration is produced only if the user changes the position of the contact on the operator interface (11) within the at least one operating area (14).

3. Method according to one of the above-mentioned claims, **characterized in that** the frequency of the vibration is changed on the basis of the movement which is used by the user to change the position of the contact on the operator interface (11).

4. Method according to one of the above-mentioned claims, **characterized in that** the vibration is produced by the vibration device (12) in discrete successive vibration pulses (13), wherein a pulse frequency of the vibration pulses (13) is changed on the basis of the movement which is used by the user to change the position of the contact on the operator interface (11).

5. Computer program product having program parts for carrying out a method according to at least one of the preceding Claims 1 to 4.

6. Electronic device (100), in particular a smartphone, a tablet PC or a navigation device, wherein the electronic device (100) has at least one processor (10) for processing data and a touch-sensitive operator interface (11), wherein the device (100) also has a vibration device (12) for producing a vibration, and wherein the operator interface (11) is designed with a scanning device for generating a scanning signal on the basis of the position of contact on the operator interface (11), **characterized in that** the electronic device (100) is designed to carry out a method for the tactile interaction of a user with the electronic device (100) in accordance with a method according to one of Claims 1 to 4.

## Revendications

1. Procédé permettant l'interaction tactile entre un utilisateur et un appareil électronique (100), par exemple un smartphone, une tablette ou un appareil de navigation, présentant au moins un processeur (10) pour le traitement de données et présentant une interface utilisateur tactile (11), dans lequel l'appareil (100) présente un dispositif à vibrations (12) destiné à générer une vibration, et dans lequel l'interface utilisateur (11) est réalisée avec un dispositif de balayage destiné à générer un signal de balayage en fonction d'une position d'un contact sur l'interface utilisateur (11), dans lequel une vibration est générée au moins dans l'interface utilisateur (11) en fonction d'un mouvement par lequel l'utilisateur modifie la position du contact à l'intérieur d'une zone de commande (14) sur l'interface utilisateur (11), dans lequel la vibration est générée en fonction de ladite au moins une zone de commande (14), par exemple d'un bouton, d'un graphique, d'un motif ou similaires, **caractérisé en ce que** les impulsions vibratoires (13) forment une texture virtuelle (T) perceptible de manière tactile, dérivée à partir de la zone de commande (14), dans lequel au moins deux zones de commande (14) espacées l'une de l'autre sont définies sur l'interface utilisateur (11), une texture différente (T) étant dérivée de chacune des au moins deux zones de commande (14), dans lequel une seule texture (T) définit plusieurs positions, la position actuelle du contact, déterminée en continu par le dispositif de balayage, étant comparée aux positions définies par la texture (T) et une impulsion vibratoire (13) étant émise par le dispositif à vibrations (12) si un déplacement du contact au-delà d'une position définie par la texture (T) est détecté, une fréquence d'impulsions vibratoires successives (13) dépendant de la distance des positions définies par la texture.

2. Procédé selon la revendication 1, **caractérisé en ce que** la vibration n'est générée que si l'utilisateur modifie la position du contact sur l'interface utilisateur (11) à l'intérieur de ladite au moins une zone de commande (14).

3. Procédé selon l'une quelconque des revendications précédentes, **caractérisé en ce que** la fréquence de la vibration est modifiée en fonction du mouvement par lequel l'utilisateur modifie la position du contact sur l'interface utilisateur (11).

4. Procédé selon l'une quelconque des revendications précédentes, **caractérisé en ce que** la vibration est générée dans des impulsions vibratoires successives discrètes (13) par le dispositif à vibrations (12), une fréquence d'impulsion des impulsions vibratoires (13) étant modifiée en fonction du mouvement par lequel l'utilisateur modifie la position du contact sur l'interface utilisateur (11).

5. Produit de programme informatique, présentant des parties de programme permettant d'exécuter un procédé selon au moins l'une des revendications précédentes 1 à 4.

6. Appareil électronique (100), en particulier un smartphone, une tablette ou un appareil de navigation, dans lequel l'appareil électronique (100) présente au moins un processeur (10) pour le traitement de données et une surface d'utilisation tactile (11), dans lequel l'appareil (100) présente en outre un dispositif à vibrations (12) destiné à générer une vibration, et dans lequel l'interface utilisateur (11) est réalisée avec un dispositif de balayage destiné à générer un signal de balayage en fonction d'une position d'un contact sur l'interface utilisateur (11), **caractérisé en ce que** l'appareil électronique (100) est réalisé pour exécuter un procédé permettant l'interaction tactile entre un utilisateur et l'appareil électronique (100) selon un procédé selon l'une quelconque des revendications 1 à 4.
